# EUROPEAN PATENT APPLICATION

(11) **EP 2 595 034 A2**
(43) Date of publication of application: **22.05.2013**
(21) Application number: 11807010.1
(22) Date of filing: 12.07.2011
(51) Int. Cl.: G06F 3/041

(54) **TOUCH SENSING PANEL FOR DELIVERING SENSING SIGNAL TO TOUCH SENSOR CHIP BY USING CIRCUIT BOARD, AND TOUCH SENSING DEVICE**

(30) Priority: 13.07.2010 KR 20100067449
(71) Applicant: Melfas Inc., Seoul 153-801 (KR)
(72) Inventor: OH, Do Hwan, Seoul 135-794 (KR)
(74) Representative: Zardi, Marco
(86) International application number: PCT/KR2011/005086
(87) International publication number: WO 2012/008725

(57) **Abstract**

The present invention relates to a touch sensing panel for delivering a sensing signal to a touch sensor chip by using a circuit board, and a touch sensing device, wherein: the touch sensing panel is formed by using a substrate on which a conductive trace is disposed and by using a circuit board, which delivers to a touch sensor chip, a sensing signal that is generated from said conductive trace by a touching object; and said touch sensing device is capable of sensing a touch input of the touching object by using said touch sensing panel.

## Description

The present application claims the benefit of priority of PCT Application No. PCT/KR2011/005086 filed on July 12, 2011 which claims the benefit of priority of Korean Application No. 10-2010-0067449 filed on July 13, 2010, all of which are incorporated by reference in their entirety herein.

### Technical Field

The present invention relates to a touch sensing panel for sensing a touch of a touching object, and a configuration of a touch sensing device, and more particularly, to a touch sensing panel and a touch sensing device that may use a Printed Circuit Board (PCB) in which a circuit pattern is provided in advance, instead of using a conventional wiring formed by a printing or sputtering scheme.

### Background

A touch sensing technology of sensing a touch of a user's finger or a touch of an apparatus, of converting the sensed touch to a suitable electrical signal, and of outputting the electrical signal, is applied to various electronic devices and is being used as various input means.

The touch sensing technology may be applied to a laptop computer, and may be used, instead of a mouse, as a means for controlling a movement of a cursor. Additionally, the touch sensing technology may be combined with a display device, and may be used as an input means that enables a user to directly select an icon or menu displayed on a screen and enables the selected icon or menu to be executed.

Recently, a wiring pattern is being used to deliver a sensing signal generated by a touching object to a touch sensor chip.

The wiring pattern may be formed using metallic materials, such as silver and the like. The wiring pattern may be electrically connected to a transparent conductive trace, such as indium tin oxide (ITO) and the like, and may function to deliver a sensing signal to a touch sensor chip.

Since the wiring pattern is disposed in a bezel region, rather than in an effective sensing region or an effective display region of a touch sensing panel on which content is displayed, it is inevitable to form the wiring pattern with a very narrow width and gap between lines.

Due to such characteristics of the wiring pattern, a rate of inferior goods may be considerably increased due to a crack and the like during the formation of the wiring pattern, which may result in a low yield.

Additionally, a poor wiring pattern may lead to faultiness of a touch sensing panel.

In this case, in a polyethylene terephthalate (PET) film on which ITO and a wiring pattern formed of silver are formed, all panels may need to be discarded.

In particular, since a manufacturing process of a DPW type touch sensing panel employing a cover lens is not stabilized, a crack may relatively and easily occur during a silver wiring process. Accordingly, a rate of inferior goods may be significantly high during a manufacturing process of a wiring pattern.

### SUMMARY OF THE INVENTION

According to an aspect of the present invention, there is provided a touch sensing panel, including: a substrate on which a conductive trace is disposed; and a circuit board connected to the substrate, the circuit board including a circuit pattern to deliver a sensing signal generated from the conductive trace by a touching object.

According to an aspect of the present invention, there is provided a touch sensing device, including: a plurality of sensing regions including at least one electrode pattern; a touch sensor chip to generate touch information based on a change in capacitance generated in at least one of the plurality of sensing regions; and a circuit board to electrically connect the plurality of sensing regions to the touch sensor chip, wherein the circuit board includes a first circuit board that is electrically connected to at least a part of the plurality of sensing regions to receive the change in the capacitance, and a second circuit board that is electrically connected to the first circuit board and delivers the change in the capacitance to the touch sensor chip.

According to embodiments of the present invention, it is possible to remarkably reduce a rate of inferior goods during a manufacturing process of a touch sensing panel.

Additionally, according to embodiments of the present invention, a touch sensing panel may be formed by assembling a pre-formed circuit board with a transparent substrate on which a conductive trace is formed, and thus it is possible to simplify a manufacturing process of the touch sensing panel.

Furthermore, according to embodiments of the present invention, it is possible to improve a yield of a touch sensing panel.

Moreover, according to embodiments of the present invention, it is possible to reduce a bezel width of a touch sensing panel.

In addition, according to embodiments of the present invention, it is possible to omit a process of forming an insulation layer in a bezel region to protect a wiring pattern.

### BRIEF DESCRIPTION OF THE DRAWINGS

FIG. 1 is a diagram illustrating an electronic device that employs a touch sensing panel according to an embodiment of the present invention;
FIG. 2 is a diagram illustrating a configuration of a touch sensing panel according to an embodiment of the present invention;
FIG. 3 is a diagram illustrating a configuration of a touch sensing panel according to another embodiment of the present invention; and
FIG. 4 is a block diagram illustrating a configuration of a touch sensing device according to an embodiment of the present invention.

### DETAILED DESCRIPTION OF THE ILLUSTRATED EMBODIMENT

Reference will now be made in detail to embodiments of the present invention, examples of which are illustrated in the accompanying drawings, wherein like reference numerals refer to the like elements throughout. The embodiments are described below in order to explain the present invention by referring to the figures.

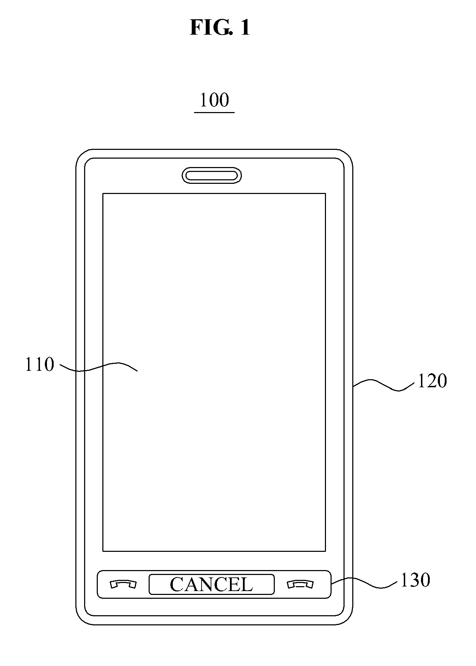

FIG. 1 is a diagram illustrating an electronic device 100 that employs a touch sensing panel according to an embodiment of the present invention.

The electronic device 100 may be interpreted as a home appliance, as well as a portable electronic device. The home appliance may include, for example, a television (TV), a Digital Video Disc (DVD) player, a refrigerator, a notebook computer, a washing machine, a desktop computer, a Liquid Crystal Display (LCD), and the like. The portable electronic device may include, for example, a mobile communication terminal, a Portable Media Player (PMP), a Personal Digital Assistant (PDA), a navigator, an MP3 player, a portable game device, a notebook computer, and the like.

The electronic device 100 may include at least one of a display 110 on which a touch sensing panel is formed, a housing 120 that forms an exterior appearance, and an input key 130 that is separated from the touch sensing panel.

To operate the electronic device 100, the input key 130 may include a most frequently used key, separately from the touch sensing panel, and may be interpreted as a mechanical input key, a touch key including a touch sensor, and the like.

According to an embodiment of the present invention, the input key 130 may be removed, and the touch sensing panel may be used for all inputs.

The display 110 may be a module to output, to a user, an image associated with an operation of the electronic device 100, and may be implemented as an LCD, a Plasma Display Panel (PDP), an Organic Light Emitting Device (OLED), and the like.

A touch sensing panel according to an embodiment of the present invention may be formed on the display 110, and may accept a touch input through a body of a user, a stylus pen, and the like.

The touch sensing panel may be attached onto the display 110, and may determine an input based on a touch. The touch sensing panel may include a substrate, and a conductive trace that is disposed on the substrate.

A transparent window may be attached onto the conductive trace, and may accept a touch from a user. The transparent window may be formed of scratch-resistant or shock-resistant materials, for example a tempered glass, an acryl, and the like.

A touch sensor chip according to an embodiment of the present invention may generate touch information enabling execution of a selected event, based on a sensing signal that is generated from the conductive trace by a touching object.

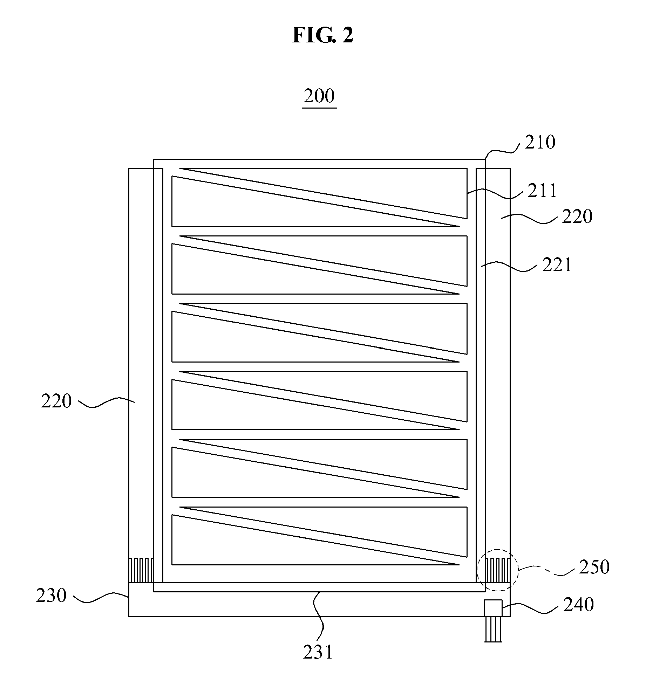

FIG. 2 is a diagram illustrating a configuration of a touch sensing panel 200 according to an embodiment of the present invention.

The touch sensing panel 200 may include a substrate 210 on which a conductive trace 211 is disposed, first circuit boards 220 and a second circuit board 230. The first circuit boards 220 and the second circuit board 230 may be used instead of a conventional wiring pattern.

The first circuit boards 220 and the second circuit board 230 may include, for example, Flexible Printed Circuit Boards (FPCBs).

The conductive trace 211 formed on the substrate 210 may be formed of transparent conductive materials, for example indium tin oxide (ITO) on a glass substrate, and the like, and may receive an input of a sensing signal by a capacitance from a touching object.

For example, when a touch sensing panel is used as a means for an input only, without a need to be transparent, the conductive trace 211 may be interpreted as copper on an FR4 substrate.

A conductive trace according to an embodiment of the present invention may be formed with a 1-Layered structure or a 2-Layered structure, with a driving-sensing structure in which a conductive trace for driving and a conductive trace for sensing are classified. In addition, the conductive trace may be formed in various patterns, for example, a diamond pattern, and the like.

The first circuit boards 220 and the second circuit board 230 may deliver, to a touch sensor chip 240, a sensing signal generated from the conductive trace 211 by the touching object.

A circuit board used instead of the conventional wiring pattern may include the first circuit boards 220 and the second circuit board 230.

A touch sensor chip may acquire the sensing signal through a circuit pattern of the first circuit boards 220 and the second circuit board 230.

Specifically, the first circuit boards 220 may receive a sensing signal generated from a conductive trace by a touching object.

The first circuit boards 220 may be connected to the substrate 210 in edges of the substrate 210 in a first axial direction.

Specifically, the first circuit boards 220 may be disposed in the edges of the substrate 210 in the first axial direction, and the second circuit board 230 may be disposed in an edge in a second axial direction that intersects the first axial direction.

In the substrate 210, a plurality of sensing regions may be formed.

For example, the first circuit boards 220 may be formed in both facing sides of the substrate 210. As illustrated in FIG. 2, the first circuit boards 220 may be formed in a left side and a right side of the substrate 210, and may be electrically connected to a conductive trace.

In this instance, due to an overlapping area 221 in which the first circuit board 220 and the substrate 210 overlap each other, a total bezel width of the touch sensing panel 200 may be reduced.

The second circuit board 230 may deliver the received sensing signal to the touch sensor chip 240.

The second circuit board 230 may be formed in a side other than the sides in which the first circuit boards 220 are formed, and may be electrically connected to the first circuit boards 220.

Specifically, the second circuit board 230 may be formed in at least one of an upper side and a lower side of the substrate 210.

In other words, the first circuit boards 220 and the second circuit board 230 may be formed in the form of 'U' or 'C' around the substrate 210, and may deliver, to the touch sensor chip 240, a sensing signal generated from a conductive trace by a touching object.

The first circuit boards 220 and the second circuit board 230 may be electrically connected through a connector structure 250.

In other words, the conductive trace 211 may be disposed in a center of the substrate 210, and the first circuit boards 220 and the second circuit board 230, in which a circuit pattern is printed instead of a wiring pattern, may be attached onto three surfaces of a bezel region through selected overlapping areas 221 and 231.

The first circuit boards 220 and the second circuit board 230, in which the circuit pattern is printed instead of the wiring pattern, may be attached to a left bezel and a right bezel. In other words, the first circuit boards 220 and the second circuit board 240, in which the circuit pattern is provided in advance, may be attached, instead of printing or sputtering-etching the wiring pattern directly on a polyethylene terephthalate (PET) film or a cover lens. Thus, it is possible to simplify a manufacturing process of the touch sensing panel 200, and to increase a yield of the touch sensing panel 200.

A yield of a typical process of forming a wiring pattern, for example a sputtering-etching process, or a printing process, such as a silk screen, may inevitably be lower than that of a process of attaching a circuit board, for example, an Anisotropic Conductive Film (ACF), an Anisotropic Conductive Paste (ACP), an Anisotropic Conductive Adhesive (ACA), and the like. Accordingly, according to embodiments of the present invention, an increase in a yield of an overall manufacturing process may be expected by attaching a circuit board to the substrate, instead of directly forming a wiring pattern on the substrate.

A total bezel width of the touch sensing panel may be reduced through the overlapping area 231, similarly to the overlapping area 221.

An ACF bonding process may need to be performed three times in total, to electrically connect the first circuit boards 220 and the second circuit board 230 to the substrate 210 on which the conductive trace 211 is printed.

In other words, since the first circuit boards 220 are formed in the left side and the right side through the ACF bonding process, the ACF bonding process may need to be performed twice in total. The second circuit board 230 that is formed in the upper side or the lower side of the substrate 210 and to which the touch sensor chip 240 is mounted, may require another ACF bonding process to be performed. Accordingly, the ACF bonding process may need to be performed three times.

Additionally, the first circuit boards 220 and the second circuit board 230 may be electrically connected to each other through the connector structure 250 and the like.

To efficiently use the substrate 210, the first circuit boards 220 formed in the left side and the right side of the substrate 210, and the second circuit board 230 formed in the upper side or the lower side may be separately provided, and may be combined with each other by the connector structure 250, and the like.

In other words, when the first circuit boards 220 and the second circuit board 230 are formed in the form of'U' or 'C', a corresponding region may need to be separated from a substrate. Accordingly, it may be difficult to efficiently use the substrate 210.

To efficiently attach the first circuit boards 220 to the left side and the right side, a size of the substrate 210 may be slightly smaller than a size of a typical touch sensing panel.

Additionally, by using the substrate 210 with the slightly smaller size, it is possible to expect an effect of generally reducing a bezel width.

Furthermore, the first circuit boards 220 and the second circuit board 230 may be used instead of the conventional wiring pattern, and accordingly it is possible to omit a process of forming an insulation layer in a bezel region of the left side and the right side to protect the wiring pattern. Thus, a manufacturing process of a touch sensing panel may be further simplified.

The touch sensing panel 200 may further include the touch sensor chip 240 to acquire the sensing signal generated by the touching object, and to generate touch information using the sensing signal.

The touch sensor chip 240 may be mounted to the second circuit board 230. Additionally, the second circuit board 230 may be electrically connected to the touch sensor chip 240.

The touch sensor chip 240 may determine whether a touch occurs or may sense a number of touches, using the received sensing signal.

Additionally, the touch sensor chip 240 may correct a touch position value of the touching object determined by the received sensing signal.

For example, when a conductive trace is formed with a driving-sensing structure, the touch sensor chip 240 may apply a driving signal to a conductive trace for driving, may receive, from a conductive trace for sensing, a sensing signal caused by a change in a mutual capacitance by the driving signal, and may generate touch information based on the received sensing signal.

The touch sensing panel 200 may be connected to a controller chip, and the controller chip may determine a touch input applied to the touch sensing panel 200.

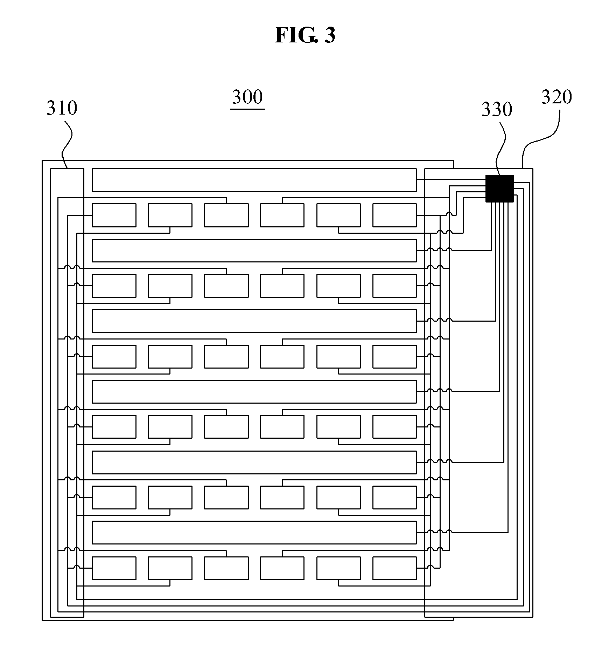

FIG. 3 is a diagram illustrating a configuration of a touch sensing panel 300 according to another embodiment of the present invention.

In the touch sensing panel 300, a first circuit board 310 and a second circuit board 320 may face each other in edges of a substrate 300 in a first axial direction. In the substrate 300, a plurality of sensing regions may be formed.

Specifically, the first circuit board 310 may be disposed in a left edge of the substrate 300, and the second circuit board 320 may be disposed in a right edge of the substrate 300.

The first circuit board 310 and the second circuit board 320 may electrically connect second electrodes of the plurality of sensing regions disposed in the same position in the first axial direction.

Additionally, a part of the second electrodes disposed in the same position in the first axial direction may be electrically connected to each other in the first circuit board 310, and the rest of the second electrodes may be electrically connected to each other in the second circuit board 320.

Similarly to FIG. 2, a touch sensor chip 330 may be electrically connected to the second circuit board 320.

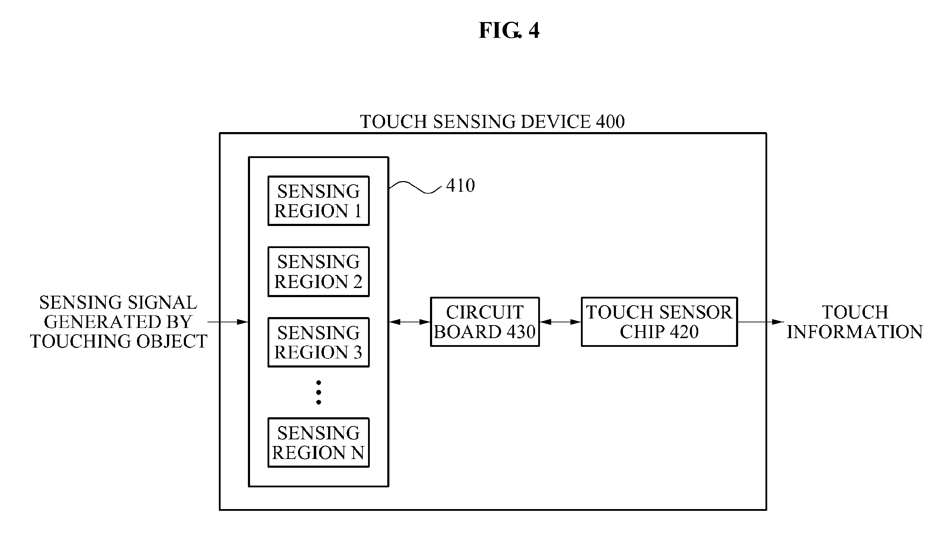

FIG. 4 is a block diagram illustrating a configuration of a touch sensing device 400 according to an embodiment of the present invention.

Referring to FIG. 4, the touch sensing device 400 may include a plurality of sensing regions 410, a touch sensor chip 420, and a circuit board 430.

The sensing regions 410 may include at least one electrode pattern, and may receive a sensing signal generated by a touch of a touching object.

The at least one electrode pattern may include a plurality of first electrodes that extend in a first axial direction, and a plurality of second electrodes that are consecutively disposed along the first axial direction. Each of the sensing regions may include at least one of the first electrodes and the second electrodes.

The sensing regions 410 may be formed in various patterns, and may be formed with a plurality of layers (N-Layer), as well as, a single layer (1-Layer).

As shown in FIG. 4, the sensing regions 410 may include sensing region 1, sensing region 2, sensing region 3, sensing region N, and the like. In a specific sensing region, a touch by a touching object may be received as a sensing signal.

The touch sensor chip 420 may generate touch information based on a change in capacitance generated in at least one of the sensing regions 410.

For example, when the sensing regions 410 include conductive traces formed with a driving-sensing structure, the touch sensor chip 420 may apply a driving signal to a conductive trace for driving.

In this instance, the touch sensor chip 420 may receive, from a conductive trace for sensing, a sensing signal caused by a change in a mutual capacitance by the driving signal, and may generate touch information based on the received sensing signal.

The circuit board 430 may electrically connect the sensing regions 410 to the touch sensor chip 420.

Specifically, the circuit board 430 may include a first circuit board and a second circuit board.

The first circuit board and the second circuit board may face each other in edges of a substrate in the first axial direction, and may be formed to electrically connect second electrodes of the sensing regions 410 disposed in the same position in the first axial direction. In the substrate, the sensing regions 410 may be formed.

In this instance, a part of the second electrodes disposed in the same position in the first axial direction may be electrically connected to each other in the first circuit board, and the rest of the second electrodes may be electrically connected to each other in the second circuit board.

The first circuit board may be electrically connected to the sensing regions 410, and may receive a change in the capacitance. The second circuit board may receive the change in the capacitance from the first circuit board, and may deliver the change in the capacitance to the touch sensor chip 420.

Accordingly, the touch sensor chip 420 may be electrically connected to the second circuit board.

The first circuit boards may be formed in a left side and a right side of the substrate in which the sensing regions 410 are formed. The second circuit board may be formed in at least one of an upper side and a lower side of the substrate in which the sensing regions 410 are formed.

A touch sensing panel according to an embodiment of the present invention may correspond to a configuration of a part of a touch sensing device according to an embodiment of the present invention.

In other words, the touch sensing panel according to an embodiment of the present invention may be used in a touch screen device, together with a display device and a circuit. The display device may be used to display a user interface, and the circuit may be used to recognize touch events occurring in different positions on a touch sensitive surface and to generate a control signal to control a host device.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. A touch sensing panel, comprising:
a substrate on which a conductive trace is disposed; and
a circuit board connected to the substrate, the circuit board comprising a circuit pattern to deliver a sensing signal generated from the conductive trace by a touching object.

2. The touch sensing panel of claim 1, wherein the circuit board comprises:
a first circuit board to receive a sensing signal generated from the conductive trace by a touching object; and
a second circuit board electrically connected to the first circuit board.

3. The touch sensing panel of claim 2, wherein the first circuit board is connected to the substrate in an edge of the substrate in a first axial direction.

4. The touch sensing panel of claim 3, wherein the second circuit board is connected to the substrate in an edge of the substrate in a second axial direction that crosses the first axial direction.

5. The touch sensing panel of claim 4, wherein the first circuit board and the second circuit board are electrically connected through a connector structure.

6. The touch sensing panel of claim 1, wherein the circuit board is a Flexible Printed Circuit Board (FPCB).

7. The touch sensing panel of claim 2, wherein the second circuit board comprises a touch sensor chip,
wherein the touch sensor chip receives the sensing signal through a circuit pattern of the first circuit board and the second circuit board.

8. The touch sensing panel of claim 1, further comprising:
a touch sensor chip to receive the sensing signal and to generate touch information using the sensing signal.

9. A touch sensing device, comprising:
a plurality of sensing regions comprising at least one electrode pattern;
a touch sensor chip to generate touch information based on a change in capacitance generated in at least one of the plurality of sensing regions; and
a circuit board to electrically connect the plurality of sensing regions to the touch sensor chip,
wherein the circuit board comprises a first circuit board that is electrically connected to at least a part of the plurality of sensing regions to receive the change in the capacitance, and a second circuit board that is electrically connected to the first circuit and delivers the change in the capacitance to the touch sensor chip.

10. The touch sensing device of claim 9, wherein the first circuit board is disposed in an edge of a substrate in a first axial direction, and the second circuit board is disposed in an edge of the substrate in a second axial direction that crosses the first axial direction, the plurality of sensing regions being formed in the substrate.

11. The touch sensing device of claim 9, wherein the at least one electrode pattern comprises a plurality of first electrodes that extend in a first axial direction, and a plurality of second electrodes that are consecutively disposed along the first axial direction, and
wherein each of the plurality of sensing regions comprises at least one of the first electrodes and the second electrodes.

12. The touch sensing device of claim 11, wherein the first circuit board and the second circuit board face each other in edges of a substrate in the first axial direction, the plurality of sensing regions being formed in the substrate.

13. The touch sensing device of claim 11, wherein the first circuit board and the second circuit board electrically connect the second electrodes disposed in the same position in the first axial direction.

14. The touch sensing device of claim 13, wherein a part of the second electrodes disposed in the same position in the first axial direction are electrically connected to each other in the first circuit board, and the rest of the second electrodes are electrically connected to each other in the second circuit board.

15. The touch sensing panel of claim 1, further comprising a controller chip for determining a touch input applied to the touch sensing panel.
